# EUROPÄISCHE PATENTSCHRIFT

(11) **EP 3 312 487 B1**
(45) Veröffentlichungstag und Bekanntmachung des Hinweises auf die Patenterteilung: **24.07.2019**
(21) Anmeldenummer: 17193064.7
(22) Anmeldetag: 26.09.2017
(51) Int. Cl.: F16L 17/067, F16L 19/02, F16J 15/06, F16J 15/10

(54) **RINGDICHTUNG ZUR MONTAGE IN EINER NUT UND VERBINDUNGSKOMPONENTE EINER HYDRAULISCHEN ANLAGE**
ANNULAR SEAL FOR MOUNTING IN A GROOVE AND CONNECTION COMPONENT OF A HYDRAULIC SYSTEM
JOINT D'ÉTANCHÉITÉ ANNUAIRE PERMETTANT LE MONTAGE DANS UNE RAINURE ET PIÈCES DE RACCORDEMENT D'UNE INSTALLATION HYDRAULIQUE

(30) Priorität: 21.10.2016 DE 102016120082
(43) Veröffentlichungstag der Anmeldung: 25.04.2018
(73) Patentinhaber: VOSS Fluid GmbH, 51688 Wipperfürth (DE)
(72) Erfinder: LE, Detlef, 51688 Wipperfürth (DE); POTT, Harald, 42499 Hückeswagen (DE); ESSER, Franz, 51688 Wipperfürth (DE)
(74) Vertreter: Patent- und Rechtsanwälte Dr. Solf & Zapf

(56) Entgegenhaltungen:
- EP-A1- 3 067 592
- EP-A2- 0 645 573
- DE-A1- 2 207 997
- DE-A1-102013 006 083
- DE-B3-102007 021 175
- FR-A- 759 424

## Beschreibung

Die Erfindung betrifft eine Ringdichtung zur Montage in einer Nut einer Verbindungskomponente einer hydraulischen Anlage . Ferner betrifft die Erfindung eine Verbindungskomponente einer hydraulischen Anlage mit mindestens einer Nut, wobei in die Nut eine Ringdichtung eingelegt ist.

Rohrverschraubungen mit stirnseitiger Abdichtung, insbesondere gemäß ISO 8434-3 (Stand 07/2005) mit Verschraubungskomponenten sind im Stand der Technik in einer Vielzahl von Ausgestaltungen bekannt. Derartige Verschraubungen finden vor allem im Bereich mobiler Arbeitsmaschinen Anwendung. Die Nut zur Aufnahme einer Ringdichtung befindet sich üblicherweise in einer Stirnseite einer Verbindungskomponente, insbesondere einer Rohrverschraubung.

Zum Abdichten der Rohrverschraubung wird beispielsweise eine erste Verbindungskomponente mit einer in eine Nut montierten Ringdichtung an eine zweite Verbindungskomponente herangeführt, wobei die zweite Verbindungskomponente stirnseitig an der Ringdichtung und der ersten Verbindungskomponente angelegt wird. Anschließend werden die beiden Verbindungskomponenten, beispielsweise mittels einer Überwurfmutter, unter Aufbringung von Axialkräften miteinander verbunden werden. Durch das Aufbringen der Axialkräfte wird die Ringdichtung gestaucht und sorgt für eine vorteilhafte Abdichtung zwischen einer ersten Verbindungskomponente und der zweiten Verbindungskomponente.

Als Ringdichtungen kommen dazu üblicherweise O-Ring-Dichtungen zum Einsatz, die einen kreisförmigen Querschnitt aufweisen und rotationssymmetrisch ausgebildet sind. In Abhängigkeit von der Form der Nut sind auch andere Dichtungsformen bekannt. So offenbart beispielsweise die US 2005/0280215 A1 eine symmetrische, trapezförmige Ringdichtung, die im Montagezustand mit einer Seitenflanke an einem Nutgrund einer Nut anliegt und in der Nut durch eine rotative Bewegung verspannt wird. Die DE 10 2013 006 083 A1 offenbart eine weitere Ringdichtung.

Die aus dem Stand der Technik bekannten Ringdichtungen weisen allerdings den Nachteil auf, dass insbesondere bei sehr hohen Drücken und Druckschwankungen eine ausreichende Dichtigkeit nicht zuverlässig gewährleistet werden kann.

Der vorliegenden Erfindung liegt deshalb die Aufgabe zu Grunde, eine Ringdichtung sowie eine Verbindungskomponente mit einer Ringdichtung anzugeben, mit denen die aus dem Stand der Technik bekannten Nachteile überwunden werden.

Die vorgenannte Aufgabe ist mit den Merkmalen des Anspruchs 1 gelöst. Die nachfolgende Betrachtung einer separaten Ringdichtung bezieht sich stets auf eine nicht montierte, unbelastete Ringdichtung. Ferner sind die nachfolgend beschriebenen geometrischen Eigenschaften einer Ringdichtung vorteilhaft in einer Schnittansicht zu erkennen, die den Querschnitt der Ringdichtung zeigt.

Eine erfindungsgemäße Ringdichtung ist zur Montage in einer Nut einer Verbindungskomponente einer hydraulischen Anlage ausgebildet und eingerichtet. Vorzugsweise handelt es sich dabei um eine Verbindungskomponente einer Rohrverschraubung. Die Ringdichtung ist rotationssymmetrisch zu einer Mittelachse ausgebildet, so dass die Ringdichtung über ihren gesamten Umfang einen gleichbleibenden Querschnitt aufweist. Die Ringdichtung weist mindestens eine Innenflanke auf. Insbesondere sind alle in Richtung der Mittelachse der Ringdichtung orientierte Flächen Teil der Innenflanke der Ringdichtung.

Ferner weist die Ringdichtung mindestens eine erste Seitenflanke und mindestens eine zweite Seitenflanke auf. Die erste Seitenflanke ist zur Anlage an einem Nutgrund der Nut in einer Verbindungskomponente eingerichtet und ausgebildet. Die erste Seitenflanke erstreckt sich ausgehend von der Mittelachse der Ringdichtung zwischen einem innenliegenden Radius R1 und einem außenliegenden Radius R2. Die Erstreckung der ersten Seitenflanke im Bereich zwischen dem innenliegenden Radius R1 und dem außenliegenden Radius R2 ist unabhängig von der tatsächlichen Orientierung bzw. Ausrichtung der ersten Seitenflanke in Bezug auf die Mittelachse. Der Radius R2 liegt insbesondere zwischen 5 mm und 24 mm. Der Radius R1 liegt insbesondere zwischen 2,5 mm und 23 mm, insbesondere 4 mm und 23 mm. Vorzugsweise ist die erste Seitenflanke allerdings so ausgerichtet, dass sie in einer Ebene E liegt, und dass die Mittelachse eine Normale der Ebene E ist.

Ein vorteilhaftes Anlageverhalten der Ringdichtung innerhalb einer Nut lässt sich insbesondere dadurch erreichen, dass der Abstand der Innenflanke der Ringdichtung zur Mittelachse stets kleiner als der Radius R1 ist. Das bedeutet, dass die Innenflanke, ausgehend von der ersten Seitenflanke so ausgebildet ist, dass der Radius R1 stets größer ist als der radiale Abstand der Oberfläche der Innenflanke zur Mittelachse. Folglich ist der radiale Abstand jedes Punktes auf der Oberfläche der Innenflanke zur Mittelachse kleiner als der Radius R1. Vorzugsweise ist die Innenflanke derart ausgebildet, dass sich der radiale Abstand zur Mittelachse mit zunehmendem Abstand zur ersten Seitenflanke stets vergrößert.

Als Material für die Ringdichtung eignet sich insbesondere Acrylnitril-Butadin-Kautschuk, Ethylen-Propylen-Dien-Kautschuk, Silikon Kautschuk, Fluor-Karbon-Kautschuk, Fluor-Silikon-Kautschuk, Hydrierter-Acrylnitril-Butadin-Kautschuk und Acrylat-Kautschuk.

Durch eine derartige Ringdichtung lässt sich das Anlageverhalten in einer Nut einer Verbindungskomponente einer hydraulischen Anlage bei Komprimierung durch eine zweite Verbindungskomponente derart verbessern, dass eine zuverlässige Dichtheit, insbesondere bei Druckschwankungen, und eine lange Standzeit der Dichtung erreicht werden.

Das Anlageverhalten der Ringdichtung lässt sich insbesondere gemäß einer ersten Ausgestaltung dadurch weiter verbessern, dass die Innenflanke mindestens einen konkav gewölbten Abschnitt aufweist, insbesondere dass die Innenflanke vollständig, also im Wesentlichen über ihre gesamte Länge, konkav gewölbt ist. Während der Montage, beispielsweise Rohrverschraubung, nämlich dem Zusammenfügen einer ersten Verbindungskomponente und einer zweiten Verbindungskomponente, wird eine Kraft insbesondere auf die zweite Seitenflanke der Ringdichtung bewirkt, wodurch die Ringdichtung komprimiert wird. Durch den mindestens einen konkav gewölbten Abschnitt kann genau definiert werden, in welchem Bereich eine Verformung, insbesondere Kompression, der Ringdichtung erfolgt, wodurch die Anlage der zweiten Seitenflanke zur zweiten Verbindungskomponente sehr genau gesteuert werden kann. Zudem ist dieses Ausführungsbeispiel vorteilhaft zur Abdichtung einer Rohrverschraubung, da der innenliegende Systemdruck der Anlage ebenfalls an der Ringdichtung anliegt. Vorzugsweise ist die Innenflanke im Wesentlichen über ihre gesamte Länge konkav gewölbt.

Ein besonders gutes Anlageverhalten lässt sich gemäß einer weiteren Ausgestaltung insbesondere dadurch erreichen, dass die maximale Wölbungstiefe des konkav gewölbten Abschnitts bzw. der Innenflanke zwischen 1 % und 10 % der Breite der Ringdichtung beträgt. Die Ringdichtung hat eine Breite, die orthogonal ausgehend von der ersten Seitenflanke bis zur äußeren Kante der Ringdichtung, insbesondere der äußersten Oberfläche der zweiten Seitenflanke, gemessen wird. Die Breite ist folglich die maximale Erstreckung der Ringdichtung entlang der Mittelachse.

Die Wölbungstiefe ist der Abstand des gewölbten Abschnitts bzw. der Oberfläche der Innenflanke im Bereich der Wölbung zu einer gedachten, direkten Verbindungslinie zwischen dem Anfang und dem Ende des gewölbten Abschnitts bzw. der Wölbung der Innenflanke. Eine besonders vorteilhafte Wölbungstiefe liegt vor, wenn die maximale Wölbungstiefe etwa 15 % der Breite der Ringdichtung beträgt. Vorteilhafte Breiten der Ringdichtung liegen im Bereich zwischen 1,5 mm und 2,5 mm, insbesondere 1,78 mm.

Das Dichtverhalten der Ringdichtung lässt sich gemäß einer weiteren Ausgestaltung weiter vorteilhaft dadurch beeinflussen, dass vorgesehen ist, dass die Innenflanke mit einem Winkel α von 105° zur ersten Seitenflanke geneigt ist. Durch eine derartige Anordnung der Innenflanke relativ zur ersten Seitenflanke lässt sich eine vorteilhafte Kraftverteilung innerhalb der Ringdichtung, insbesondere nach der vollständigen Montage einer Rohrverschraubung, erreichen. Die erste Seitenflanke ist im Montagezustand zur Anlage am Nutgrund einer Nut vorgesehen. Folglich erfolgt die Kraftübertragung von der Ringdichtung auf die Verbindungskomponente im Wesentlichen über die erste Seitenflanke.

Durch die geneigte Anordnung der Innenflanke in Bezug auf die erste Seitenflanke ist die Innenflanke vorzugsweise mit zunehmendem Abstand zur ersten Seitenflanke als Innenkonus ausgebildet. Insbesondere ist aber auch vorgesehen, dass eine grundsätzlich derart geneigte Innenflanke einen konkav gewölbten Abschnitt aufweist bzw. insgesamt konkav gewölbt ist. Der genannte Winkel α bezieht sich in einem derartigen Fall auf die Neigung einer gedachten Verbindungslinie zwischen dem Beginn und dem Ende eines gewölbten Abschnitts bzw. der Wölbung der Innenflanke, in Bezug auf die auch die Wölbungstiefe gemessen wird.

Die Innenflanke geht in einem Übergang auf die zweite Seitenflanke über. Dabei hat sich als vorteilhaft herausgestellt, wenn gemäß einer weiteren Ausgestaltung vorgesehen ist, dass der Übergang von der Innenflanke auf die zweite Seitenflanke einen Abstand A zur Mittelachse aufweist, und dass der Abstand A kleiner als der Radius R1 ist. Der Übergang von der Innenflanke auf die zweite Seitenflanke ist ein Bereich der Dichtung, der bei der Montage stark verformt wird. Durch die spezielle Anordnung des Übergangs lässt sich das Verformungsverhalten der Ringdichtung vorteilhaft beeinflussen. Der Übergang ist vorzugsweise Teil einer umlaufenden Dichtnase, die zumindest teilweise aus der Innenflanke und der zweiten Seitenflanke gebildet wird. Der Übergang wird bei der geometrischen Betrachtung zur Hälfte der Innenflanke und zur Hälfte der zweiten Seitenflanke zugerechnet.

Bevorzugt um die Dichtung fest innerhalb einer Nut montierbar zu machen, um diese beispielsweise bereits in einer Nut vorzumontieren, hat sich gemäß einer weiteren Ausgestaltung der Ringdichtung als vorteilhaft herausgestellt, wenn vorgesehen ist, dass eine Außenflanke vorhanden ist, und dass die Außenflanke zumindest abschnittsweise, insbesondere vollständig, orthogonal zur ersten Seitenflanke ausgerichtet ist. Die Außenflanke ist vorzugsweise im Wesentlichen parallel zur Mittelachse ausgerichtet. Durch die zumindest teilweise orthogonale Ausrichtung der Außenflanke zur ersten Seitenflanke kann die Ringdichtung vorteilhaft in einer Nut gehalten und vorgespannt werden, wodurch sie verliersicher in der Nut gehalten wird. Vorzugsweise beträgt die Erstreckung der Außenflanke, betrachtet orthogonal zur ersten Seitenflanke, etwa 70 % der Höhe, insbesondere 90 % der Höhe, bevorzugt 100 % der Höhe, der ersten Seitenflanke (Differenz zwischen dem Radius R1 und dem Radius R2).

Insbesondere in Nuten, die zwei im Wesentlichen parallel zueinander verlaufende, zum Nutgrund in einem Winkel abweichend von 90° geneigte Nutflanken aufweisen, kann eine derartige Dichtung mit einer orthogonal zur ersten Seitenflanke angeordneten Außenflanke vorteilhaft verliersicher gehalten werden.

Gemäß einer weiteren Ausgestaltung der Ringdichtung hat sich zudem als vorteilhaft herausgestellt, wenn die Erstreckung der Außenflanke, gemessen orthogonal zur ersten Seitenflanke, kleiner als die Breite der Ringdichtung ist. Sofern von der "Breite" der Ringdichtung gesprochen wird, ist aber stets die maximale Breite der Ringdichtung gemeint, die wie vorstehend beschrieben bestimmt wird. Durch eine derartige asymmetrische Ausgestaltung der Ringdichtung wird das Anlage- und Kompressionsverhalten der Ringdichtung vorteilhaft optimiert.

Insbesondere die Standzeit der Dichtung lässt sich dadurch verbessern, dass die Innenflanke und/oder die erste Seitenflanke und/oder die zweite Seitenflanke und/oder die Außenflanke einen stetigen Verlauf aufweisen. Vorzugsweise weisen die Innenflanke, die Außenflanke, die erste Seitenflanke und die zweite Seitenflanke einen stetigen Verlauf auf. Mit "stetigen Verlauf" ist dabei ein Verlauf gemeint, der keine Unstetigkeitsstellen in Form von Winkeln oder Ecken aufweist, sondern stets ein Verlauf, der mathematisch als "Spline" beschreibbar ist. Vorteilhaft ist auch vorgesehen, dass die Übergänge zwischen der Innenflanke und der ersten Seitenflanke, der ersten Seitenflanke und der Außenflanke, der Außenflanke und der zweiten Seitenflanke sowie der zweiten Seitenflanke und der Innenflanke stetig ausgebildet sind. Die Übergänge werden bei der geometrischen Betrachtung jeweils zur Hälfte der jeweils betreffenden Flanken zugeordnet.

Gemäß einer weiteren Ausgestaltung der Ringdichtung ist ferner vorgesehen, dass die Übergänge zwischen der Innenflanke, der ersten Seitenflanke, der zweiten Seitenflanke und der Außenflanke einen Radius aufweisen. Der Radius der Übergänge zwischen der Innenflanke der ersten Seitenflanke sowie der ersten Seitenflanke und der Außenflanke sowie der Außenflanke und der zweiten Seitenflanke sind vorzugsweise größer als der Radius des Übergangs zwischen der zweiten Seitenflanke und der Innenflanke.

Gemäß einer nächsten Ausgestaltung der Ringdichtung ist zudem vorgesehen, dass die zweite Seitenflanke in einem Winkel β zwischen 10° und 30° zur ersten Seitenflanke ausgerichtet ist. Insbesondere liegt die erste Seitenflanke in einer Ebene E und die zweite Seitenflanke ist in einem Winkel zwischen 5° und 35°, insbesondere zwischen 10° und 30°, zu einer zur Ebenen E parallelen Ebene ausgerichtet. Durch diese Ausrichtung der ersten Seitenflanke ist die Ringdichtung im Bereich der zweiten Seitenflanke konisch ausgebildet.

Als besonders vorteilhaft hat sich gemäß einer weiteren Ausgestaltung herausgestellt, wenn vorgesehen ist, dass sich die zweite Seitenflanke zwischen einem innenliegenden Radius R3 und einem außenliegenden Radius R4 erstreckt, und dass der Radius R3 kleiner als der Radius R1 ist. Die zweite Seitenflanke beginnt also in einem Bereich, der näher an der Mittelachse orientiert ist als der Beginn der ersten Seitenflanke am Radius R1. Dass sich die zweite Seitenflanke zwischen einem innenliegenden Radius R3 und einem außenliegenden Radius R4 erstreckt, ist unabhängig von der tatsächlichen Ausrichtung der zweiten Seitenflanke in diesen Bereich und definiert lediglich die Erstreckung der zweiten Seitenflanke in Bezug auf die Mittelachse. Beispielsweise entspricht der Radius R2 dem Radius R4. Vorzugsweise liegt der Radius R2 und/oder der Radius R4 im Bereich zwischen 5 mm und 24 mm. Insbesondere liegt der Radius R3 im Bereich zwischen 3,5 mm und 22,5 mm.

Die eingangs genannte Aufgabe ist ferner bei einer Verbindungskomponente gelöst mit den Merkmalen des Anspruchs 12. Die Verbindungskomponente einer hydraulischen Anlage weist mindestens eine Nut auf, wobei die Nut vorzugsweise stirnseitig angeordnet ist und einen Nutgrund sowie zwei in einem Winkel zum Nutgrund angeordnete Nutflanken aufweist. In der Nut ist eine Ringdichtung montiert, die rotationssymmetrisch zu einer Mittelachse ausgebildet ist, wobei die Ringdichtung mindestens eine Innenflanke, eine erste Seitenflanke und eine zweite Seitenflanke aufweist. Die erste Seitenflanke der Ringdichtung liegt im in die Nut eingebrachten Zustand der Ringdichtung - ohne montierte zweite Verbindungskomponente - an dem Nutgrund der Nut an und erstreckt sich im Bereich zwischen einem, ausgehend von der Mittelachse, innenliegenden Radius R1 und einem außenliegenden Radius R2. Ein vorteilhaftes Dichtverhalten der Ringdichtung wird dadurch erreicht, dass der radiale Abstand der Innenflanke der Ringdichtung zur Mittelachse stets kleiner als der Radius R1 ist.

Die erfindungsgemäße Ausgestaltung der Ringdichtung ist bereits vorstehend beschrieben worden, so dass hier auf diese Beschreibung Bezug genommen wird. Die an der Verbindungskomponente angeordnete Ringdichtung ist gemäß einem der vorstehenden Ausführungsbeispiele ausgestaltet.

Gemäß einer Ausgestaltung der Verbindungskomponente ist vorgesehen, dass die Breite der Ringdichtung, gemessen orthogonal zur ersten Seitenflanke, so gewählt ist, dass die Ringdichtung mit zwischen 10 % und 40 %, insbesondere 32 %, der Breite der Ringdichtung aus der Nut herausragt. Die Tiefe der Nut ist folglich entsprechend dimensioniert. Im in der Nut vormontierten Zustand, also im nicht montierten Zustand der zweiten Verbindungskomponente, ragt die Ringdichtung vorzugsweise zu 32 % ihrer Breite aus der Nut heraus. Wird die zweite Verbindungskomponente montiert und eine axiale Kraft - parallel zur Mittelachse - auf die Ringdichtung bewirkt, wird die Ringdichtung entsprechend so komprimiert, dass sie im vollständigen Montagezustand nicht mehr aus der Nut herausragt. Vorzugsweise ist die Ringdichtung so bemessen, dass die zweite Seitenflanke im vormontierten Zustand vollständig außerhalb der Nut angeordnet ist. Insbesondere ragt dann auch ein Teil der Innenflanke aus der Nut heraus.

Der Transport der Verbindungskomponente mit einer an der Verbindungskomponente in der Nut montierten Ringdichtung lässt sich vereinfachen, wenn vorgesehen ist, dass die Ringdichtung in Bezug auf den Außendurchmesser der Nut ein Übermaß aufweist, so dass die Ringdichtung durch die Nut im vormontierten Zustand radial gestaucht ist. Insbesondere ist gemäß einer weiteren Ausgestaltung vorgesehen, dass die Ringdichtung umlaufend in Bezug auf ihren Außenradius R_{A} um zwischen 5 % und 25 %, insbesondere zwischen 11 % und 22 %, der Breite der Ringdichtung komprimiert ist. Wenn folglich die Breite der Ringdichtung beispielsweise 2 mm beträgt, wird die Ringdichtung in Bezug auf ihren Außenradius R_{A} beispielsweise um 0,2 mm, nämlich 20 % ihrer Breite, radial gestaucht.

Als besonders vorteilhaft im Zusammenwirken mit der erfindungsgemäßen Ringdichtung mit einer Nut hat sich ferner herausgestellt, wenn gemäß einer weiteren Ausgestaltung der Verbindungskomponente vorgesehen ist, dass die Nutflanken der Nut zumindest abschnittsweise parallel zueinander verlaufen, insbesondere zumindest in den parallelen Abschnitten in einem Winkel γ zwischen 50° und 70°, insbesondere 60°, zum Nutgrund geneigt sind. Durch eine derartige Neigung der Nutflanken entsteht im radial äußeren Bereich der rotationssymmetrischen Nut ein Hinterschnitt, in dem vorteilhaft zumindest teilweise die Außenflanke der Ringdichtung angeordnet werden kann, so dass die Ringdichtung verliersicher innerhalb der Nut gehalten ist.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel einer Ringdichtung in Schnittdarstellung,
- Fig. 2: ein Ausführungsbeispiel einer Ringdichtung in Schnittdarstellung und
- Fig. 3: ein Ausführungsbeispiel einer Verbindungskomponente mit montierter Ringdichtung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

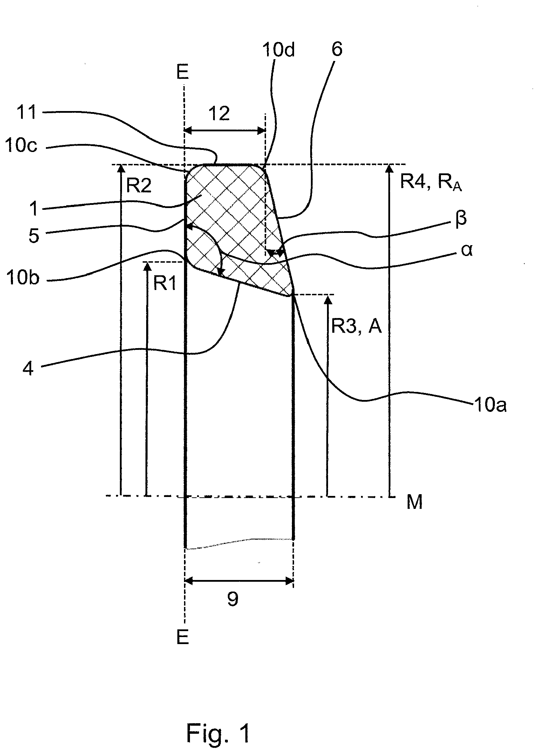

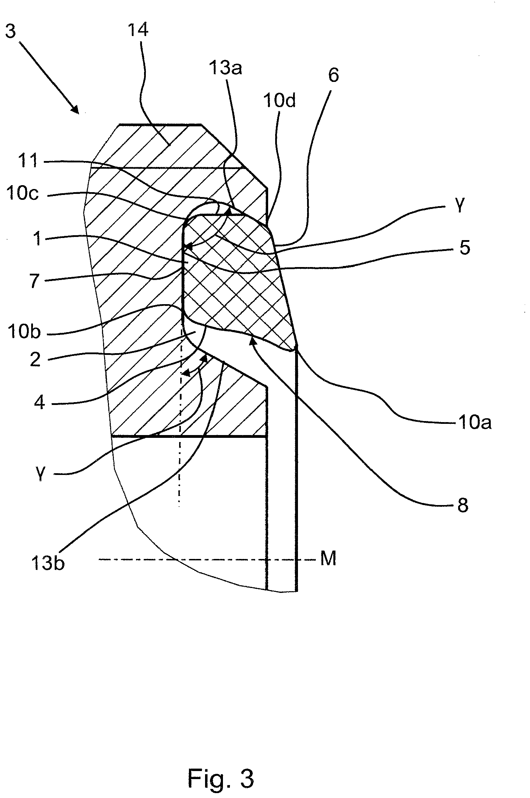

Fig. 1 zeigt ein Ausführungsbeispiel einer Ringdichtung 1 zur Montage in einer - in Fig. 3 gezeigten - Nut 2 einer Verbindungskomponente 3 einer weiter nicht dargestellten hydraulischen Anlage. Die Ringdichtung 1 gemäß Fig. 1 ist rotationssymmetrisch zu einer Mittelachse M ausgebildet. Die Ringdichtung 1 weist eine Innenflanke 4, eine erste Seitenflanke 5 sowie eine zweite Seitenflanke 6 auf. Die erste Seitenflanke 5 ist zur Anlage an einem - in Fig. 3 gezeigten - Nutgrund 7 einer Nut 2 eingerichtet und ausgebildet.

Gemäß Fig. 1 erstreckt sich die erste Seitenflanke 4 zwischen einem innenliegenden Radius R1 und einem außenliegenden Radius R2. Die Höhe der ersten Seitenflanke 5 wird folglich als Differenz der Radien R1 und R2 bestimmt. Der radiale Abstand der Innenflanke 4 zur Mittelachse M ist stets kleiner als der Radius R1. Bei dem Ausführungsbeispiel gemäß Fig. 1 ist die Innenflanke 4 vollständig eben ausgebildet und in Bezug auf die erste Seitenflanke 5 in einem Winkel α geneigt. Insbesondere ist die Innenflanke 4 bei diesem Ausführungsbeispiel mit einem Winkel α von 105° zur ersten Seitenflanke 5 geneigt.

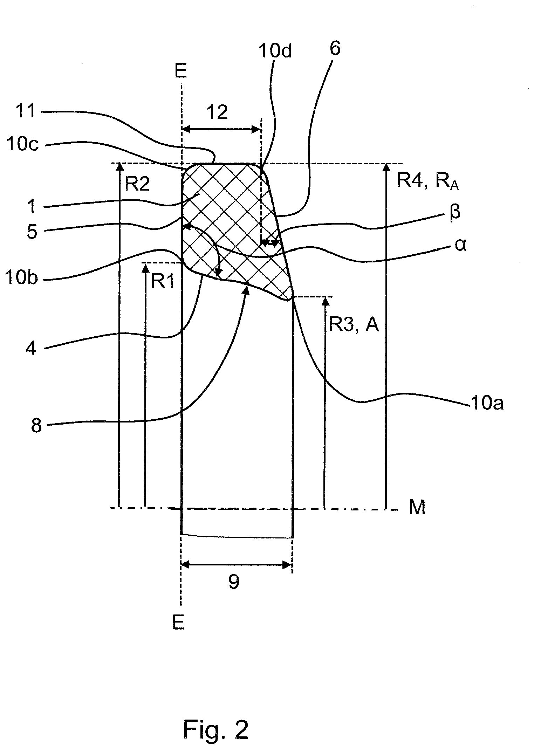

Fig. 2 zeigt ein Ausführungsbeispiel einer Ringdichtung 1, das im Wesentlichen wie das Ausführungsbeispiel gemäß Fig. 1 ausgestaltet ist. Der Unterschied ist, dass die Innenflanke 4 einen gewölbten Abschnitt 8 aufweist. Dieser gewölbte Abschnitt 8 sorgt bei der Montage, also dem Zusammenfügen der ersten Verbindungskomponente 3 - siehe Fig. 3 - und einer nicht dargestellten zweiten Verbindungskomponente dafür, dass sich die Ringdichtung 1 in diesem Bereich verformt, wodurch ein vorteilhaftes Anlageverhalten der Ringdichtung 1 in einer - in Fig. 3 gezeigten - Nut 2 erzielt wird. Bei diesem Ausführungsbeispiel beträgt die Wölbungstiefe des konkav gewölbten Abschnitts 8 etwa 15 % der Breite 9 der Ringdichtung 1. Die Breite 9 entspricht der maximalen Erstreckung der Ringdichtung 1 entlang ihrer Mittelachse M. Im vorliegenden Fall ist das die Breite 9 zwischen dem äußersten Bereich der zweiten Seitenflanke 6 und der ersten Seitenflanke 5, insbesondere der Ebene E, in der die erste Seitenflanke 5 angeordnet ist.

Auch bei dem Ausführungsbeispiel gemäß Fig. 2 sind die nicht gewölbten Bereiche der Innenflanke 4 mit einem Winkel α von etwa 105° zur ersten Seitenflanke 5 geneigt. Der Übergang 10a von der Innenflanke 4 auf die zweite Seitenflanke 6 weist einen Abstand A zur Mittelachse M auf, der kleiner als der Radius R1 ist und hier auch dem Radius R3 entspricht. Der Übergang 10a weist einen Radius auf.

Die Ausführungsbeispiele gemäß Fig. 1 und Fig. 2 weisen jeweils ferner eine Außenflanke 11 auf, die vollständig orthogonal zur ersten Seitenflanke 5 ausgerichtet ist. Die Erstreckung 12 der Außenflanke 11 parallel zur Mittelachse M, insbesondere gemessen orthogonal zur ersten Seitenflanke 5, ist kleiner als die Breite 9 der Ringdichtung 1.

Den Ausführungsbeispielen gemäß Fig. 1 und Fig. 2 ist ferner zu entnehmen, dass die Innenflanke 4, die erste Seitenflanke 5, die zweite Seitenflanke 6 sowie die Außenflanke 11 einen stetigen Verlauf aufweisen. Der Übergang 10b zwischen der Innenflanke 4 und der ersten Seitenflanke 5, der Übergang 10c zwischen der ersten Seitenflanke 5 und der Außenflanke 11, der Übergang 10d zwischen der Außenflanke 11 und der zweiten Seitenflanke 6 sowie der Übergang 10a zwischen der zweiten Seitenflanke 6 und der Innenflanke 4 sind stetig ausgebildet und weisen einen Radius auf. Dabei ist der Radius des Übergangs 10a kleiner ist als der jeweilige Radius der Übergänge 10b, 10c und 10d.

Die erste Seitenflanke 5 ist in einer Ebene E angeordnet, wobei die zweite Seitenflanke 6 in einem Winkel β von etwa 30° zur ersten Seitenflanke 5 bzw. zur Ebene E ausgerichtet ist. Die zweite Seitenflanke 6 erstreckt sich zwischen einem innenliegenden Radius R3 und einem außenliegenden Radius R4, wobei der Radius R3 kleiner als der Radius R1 ist. Der Radius R4 entspricht bei diesen Ausführungsbeispielen dem Außenradius R_{A} der Ringdichtung 1.

Fig. 3 zeigt ein Ausführungsbeispiel einer Verbindungskomponente 3 einer hydraulischen Anlage, die bei diesem Ausführungsbeispiel als Teil einer nicht näher dargestellten Rohrverschraubung ausgebildet ist. Die Nut 2 weist einen Nutgrund 7 sowie zwei in einem Winkel γ zum Nutgrund 7 geneigte Nutflanken 13a und 13b auf. Die Nutflanken 13a und 13b verlaufen parallel zueinander. In der Nut 2 ist eine Ringdichtung 1 angeordnet, wobei die Ringdichtung 1 rotationssymmetrisch zur Mittelachse M ausgebildet ist. Die Ringdichtung 1 weist eine Innenflanke 4, eine erste Seitenflanke 5, eine Außenflanke 11 sowie eine zweite Seitenflanke 6 auf.

Das in Fig. 3 dargestellte Ausführungsbeispiel der Ringdichtung 1 entspricht dem Ausführungsbeispiel gemäß Fig. 2. Die Breite 9 der Ringdichtung 1, gemessen orthogonal zur ersten Seitenflanke 5, ist bei diesem Ausführungsbeispiel so gewählt, dass die Ringdichtung 1 mit etwa 32 % ihrer Breite 9 aus der Nut 2 herausragt. Im vorliegenden Ausführungsbeispiel sind die Nut 2 sowie die Ringdichtung 1 so bemessen, dass die zweite Seitenflanke 6 im vormontierten Zustand überwiegend außerhalb der Nut 2 liegt. Ferner weist die Ringdichtung 1 ein geringes radiales Übermaß auf, so dass die Ringdichtung 1 durch die Nut 2 mit einer radialen Vorspannung gehalten wird. Die Ringdichtung 1 ist in Bezug auf ihren Außenradius R_{A} bei diesem Ausführungsbeispiel um etwa 15 % der Breite 9 der Ringdichtung 1 komprimiert.

Die Verbindungskomponente 3 weist ein Außengewinde 14 auf, das beispielsweise zur Montage mit einer - nicht dargestellten - Überwurfmutter einer - nicht dargestellten - zweiten Verbindungskomponente zusammenwirken kann, um eine axiale Kraft zu verursachen - parallel zur Mittelachse M der Ringdichtung 1 - und die Ringdichtung 1 zur Erreichung ihrer Dichtwirkung zu komprimieren.

### Bezugszeichenliste

- 1: Ringdichtung
- 2: Nut
- 3: Verbindungskomponente
- 4: Innenflanke
- 5: Erste Seitenflanke
- 6: Zweite Seitenflanke
- 7: Nutgrund
- 8: Abschnitt der Innenflanke 4
- 9: Breite der Ringdichtung 1
- 10a: Übergang zwischen Innenflanke 4 und zweiter Seitenflanke 6
- 10b: Übergang zwischen Innenflanke 4 und erster Seitenflanke 5
- 10c: Übergang zwischen erster Seitenflanke 5 und Außenflanke 11
- 10d: Übergang zwischen Außenflanke 11 und zweiter Seitenflanke 6
- 11: Außenflanke
- 12: Erstreckung der Außenflanke
- 13a: Nutflanke
- 13b: Nutflanke
- 14: Außengewinde

- A: Abstand zur Mittelachse M
- E: Ebene
- M: Mittelachse
- R1: Innenliegender Radius der ersten Seitenflanke 5
- R2: Außenliegender Radius der ersten Seitenflanke 5
- R3: Innenliegender Radius der zweiten Seitenflanke 6
- R4: Außenliegender Radius der zweiten Seitenflanke 6
- R_{A}: Außenradius der Ringdichtung 1
- α: Winkel zwischen Innenflanke 4 und erster Seitenflanke 5
- β: Winkel zwischen zweiter Seitenflanke 6 und Ebene E
- γ: Neigungswinkel der Nutflanken 13a und 13b

## Patentansprüche

1. Ringdichtung (1) zur Montage in einer Nut (2) einer Verbindungskomponente (3) einer hydraulischen Anlage, wobei die Ringdichtung (1) rotationssymmetrisch zu einer Mittelachse (M) ausgebildet ist, wobei die Ringdichtung (1) mindestens eine Innenflanke (4), eine erste Seitenflanke (5) und eine zweite Seitenflanke (6) aufweist, wobei die erste Seitenflanke (5) zur Anlage an einem Nutgrund (7) der Nut (2) vorgesehen ist, wobei sich die erste Seitenflanke (5) im Bereich zwischen einem innenliegenden Radius (R1) und einem außenliegenden Radius (R2) erstreckt, wobei
der Abstand der Innenflanke (4) zur Mittelachse (M) kleiner als der innenliegende Radius (R1) ist, wobei die Innenflanke (4) mit einem Winkel (α) zwischen 100° und 110° zur ersten Seitenflanke (5) geneigt ist, und wobei die zweite Seitenflanke (6) in einem Winkel (β) zwischen 5° und 35° zur ersten Seitenflanke (5) ausgerichtet ist.

2. Ringdichtung (1) nach Anspruch 1,
**dadurch gekennzeichnet, dass**
die Innenflanke (4) mindestens einen konkav gewölbten Abschnitt (8) aufweist, insbesondere dass die Innenflanke (4) vollständig konkav gewölbt ist.

3. Ringdichtung (1) nach Anspruch 2,
**dadurch gekennzeichnet, dass**
die maximale Wölbungstiefe des konkav gewölbten Abschnitts (8) zwischen 1 % und 20 %, insbesondere 15 %, der Breite (9) der Ringdichtung (1) beträgt.

4. Ringdichtung (1) nach einem der Ansprüche 1 bis 3,
**dadurch gekennzeichnet, dass**
die Innenflanke (4) mit einem Winkel (α) von 105° zur ersten Seitenflanke (5) geneigt ist.

5. Ringdichtung (1) nach einem der Ansprüche 1 bis 4,
**dadurch gekennzeichnet, dass**
der Übergang (10a) von der Innenflanke (4) auf die zweite Seitenflanke (6) einen Abstand (A) zur Mittelachse (M) aufweist, und dass der Abstand (A) kleiner als der innenliegende Radius (R1) ist.

6. Ringdichtung (1) nach einem der Ansprüche 1 bis 5,
**dadurch gekennzeichnet, dass**
eine Außenflanke (11) vorhanden ist, und dass die Außenflanke (11) zumindest abschnittsweise, insbesondere vollständig, orthogonal zur ersten Seitenflanke (5) ausgerichtet ist.

7. Ringdichtung (1) nach einem der Ansprüche 1 bis 6,
**dadurch gekennzeichnet, dass**
eine Außenflanke (11) vorhanden ist, und dass die Erstreckung (12) der Außenflanke (11), gemessen orthogonal zur ersten Seitenflanke (5), kleiner als die Breite (9) der Ringdichtung (1) ist.

8. Ringdichtung (1) nach einem der Ansprüche 1 bis 7,
**dadurch gekennzeichnet, dass**
die Innenflanke (4) und/oder die erste Seitenflanke (5) und/oder die zweite Seitenflanke (6) und/oder die Außenflanke (11) einen stetigen Verlauf aufweisen.

9. Ringdichtung (1) nach einem der Ansprüche 1 bis 8,
**dadurch gekennzeichnet, dass**
die Übergänge (10a, 10b, 10c, 10d) zwischen der Innenflanke (4), der ersten Seitenflanke (5), der zweiten Seitenflanke (6) und der Außenflanke (11) einen Radius aufweisen.

10. Ringdichtung (1) nach einem der Ansprüche 1 bis 9,
**dadurch gekennzeichnet, dass**
die zweite Seitenflanke (6) in einem Winkel (β) zwischen 10° und 30° zur ersten Seitenflanke (5) ausgerichtet ist.

11. Ringdichtung (1) nach einem der Ansprüche 1 bis 10,
**dadurch gekennzeichnet, dass**
sich die zweite Seitenflanke (6) zwischen einem innenliegenden Radius (R3) und einem außenliegenden Radius (R4) erstreckt, und dass der innenliegende Radius (R3) der zweiten Seitenflanke (6) kleiner als der innenliegende Radius (R1) der ersten Seitenflanke (5) ist.

12. Verbindungskomponente (3) einer hydraulischen Anlage, nämlich einer Rohrverschraubung mit stirnseitiger Abdichtung gemäß ISO 8434-3 nach Stand 07/2005, mit mindestens einer Nut (2), wobei die Nut (2) einen Nutgrund (7) und zwei in einem Winkel zum Nutgrund (7) angeordnete Nutflanken (13a, 13b) aufweist, wobei in der Nut (2) eine nach Anspruch 1 ausgebildete Ringdichtung (1) angeordnet ist, wobei die erste Seitenflanke (5) der Ringdichtung (1) an dem Nutgrund (7) der Nut (2) anliegt

13. Verbindungskomponente (3) nach Anspruch 12,
**dadurch gekennzeichnet, dass**
die Ringdichtung (1) nach einem der Ansprüche 2 bis 11 ausgebildet ist.

14. Verbindungskomponente (3) nach Anspruch 12 oder 13,
**dadurch gekennzeichnet, dass**
die Breite (9) der Ringdichtung (1), gemessen orthogonal zur ersten Seitenflanke (5), so gewählt ist, dass die Ringdichtung (1) mit zwischen 10 % und 40 %, insbesondere 32 %, der Breite (9) der Ringdichtung (1) aus der Nut (2) herausragt.

15. Verbindungskomponente (3) nach einem der Ansprüche 12 bis 14,
**dadurch gekennzeichnet, dass**
der Außendurchmesser (R_{A}) der Ringdichtung (1) in Bezug auf die Nut (2) ein Übermaß aufweist, so dass die Ringdichtung (1) durch die Nut radial komprimiert ist.

16. Verbindungskomponente (3) nach Anspruch 15,
**dadurch gekennzeichnet, dass**
die Ringdichtung (1) umlaufend um zwischen 5 % und 25 %, insbesondere zwischen 11 % und 22 %, der Breite (9) der Ringdichtung (1) komprimiert ist.

17. Verbindungskomponente (3) nach einem der Ansprüche 12 bis 16,
**dadurch gekennzeichnet, dass**
die Nutflanken (13a, 13b) der Nut (2) zumindest abschnittsweise parallel zueinander verlaufen, insbesondere in den parallelen Abschnitten in einem Winkel (γ) zwischen 50° und 70°, insbesondere 60°, zum Nutgrund (7) geneigt sind.

## Claims

1. Ring seal (1) for mounting in a groove (2) of a connecting component (3) of a hydraulic system, the ring seal (1) being of rotationally symmetrical configuration with respect to a centre axis (M), the ring seal (1) having at least one inner flank (4), a first side flank (5) and a second side flank (6), the first side flank (5) being provided for bearing against a groove bottom (7) of the groove (2), the first side flank (5) extending in the region between an inner radius (R1) and an outer radius (R2), the spacing of the inner flank (4) from the centre axis (M) being smaller than the inner radius (R1), the inner flank (4) being inclined at an angle (α) of between 100° and 110° with respect to the first side flank (5), and the second side flank (6) being oriented at an angle (β) of between 5° and 35° with respect to the first side flank (5).

2. Ring seal (1) according to Claim 1, **characterized in that** the inner flank (4) has at least one concavely curved section (8), in particular **in that** the inner flank (4) is completely concavely curved.

3. Ring seal (1) according to Claim 2, **characterized in that** the maximum curvature depth of the concavely curved section (8) is between 1% and 20%, in particular 15%, of the width (9) of the ring seal (1).

4. Ring seal (1) according to one of Claims 1 to 3, **characterized in that** the inner flank (4) is inclined at an angle (α) of 105° with respect to the first side flank (5).

5. Ring seal (1) according to one of Claims 1 to 4, **characterized in that** the transition (10a) from the inner flank (4) to the second side flank (6) is at a spacing (A) from the centre axis (M), and **in that** the spacing (A) is smaller than the inner radius (R1).

6. Ring seal (1) according to one of Claims 1 to 5, **characterized in that** there is an outer flank (11), and **in that** the outer flank (11) is oriented orthogonally with respect to the first side flank (5) at least in sections, in particular completely.

7. Ring seal (1) according to one of Claims 1 to 6, **characterized in that** there is an outer flank (11), and **in that** the extent (12) of the outer flank (11), measured orthogonally with respect to the first side flank (5), is smaller than the width (9) of the ring seal (1).

8. Ring seal (1) according to one of Claims 1 to 7, **characterized in that** the inner flank (4) and/or the first side flank (5) and/or the second side flank (6) and/or the outer flank (11) have/has a steady course.

9. Ring seal (1) according to one of Claims 1 to 8, **characterized in that** the transitions (10a, 10b, 10c, 10d) between the inner flank (4), the first side flank (5), the second side flank (6) and the outer flank (11) have a radius.

10. Ring seal (1) according to one of Claims 1 to 9, **characterized in that** the second side flank (6) is oriented at an angle (β) of between 10° and 30° with respect to the first side flank (5).

11. Ring seal (1) according to one of Claims 1 to 10, **characterized in that** the second side flank (6) extends between an inner radius (R3) and an outer radius (R4), and **in that** the inner radius (R3) of the second side flank (6) is smaller than the inner radius (R1) of the first side flank (5).

12. Connecting component (3) of a hydraulic system, namely of a screwed pipe connection with an end-side seal in accordance with ISO 8434-3 at the time of 07/2005, having at least one groove (2), the groove (2) having a groove bottom (7) and two groove flanks (13a, 13b) which are arranged at an angle with respect to the groove bottom (7), a ring seal (1) which is configured according to Claim 1 being arranged in the groove (2), the first side flank (5) of the ring seal (1) bearing against the groove bottom (7) of the groove (2).

13. Connecting component (3) according to Claim 12, **characterized in that** the ring seal (1) is configured according to one of Claims 2 to 11.

14. Connecting component (3) according to Claim 12 or 13, **characterized in that** the width (9) of the ring seal (1), measured orthogonally with respect to the first side flank (5), is selected in such a way that the ring seal (1) protrudes out of the groove (2) with between 10% and 40%, in particular 32%, of the width (9) of the ring seal (1).

15. Connecting component (3) according to one of Claims 12 to 14, **characterized in that** the external diameter (R_{A}) of the ring seal (1) has an oversize in relation to the groove (2), with the result that the ring seal (1) is compressed radially by way of the groove.

16. Connecting component (3) according to Claim 15, **characterized in that** the ring seal (1) is compressed circumferentially by between 5% and 25%, in particular between 11% and 22%, of the width (9) of the ring seal (1).

17. Connecting component (3) according to one of Claims 12 to 16, **characterized in that** the groove flanks (13a, 13b) of the groove (2) run parallel to one another at least in sections, in particular are inclined in the parallel sections at an angle (γ) of between 50° and 70°, in particular 60°, with respect to the groove bottom (7).

## Revendications

1. Joint d'étanchéité annulaire (1) pour le montage dans une rainure (2) d'un composant de raccordement (3) d'une installation hydraulique, le joint d'étanchéité annulaire (1) étant réalisé avec une symétrie de révolution par rapport à un axe médian (M), le joint d'étanchéité annulaire (1) présentant au moins un flanc intérieur (4), un premier flanc latéral (5) et un deuxième flanc latéral (6), le premier flanc latéral (5) étant prévu pour s'appliquer contre un fond de rainure (7) de la rainure (2), le premier flanc latéral (5) s'étendant dans la région entre un rayon intérieur (R1) et un rayon extérieur (R2),
la distance du flanc intérieur (4) à l'axe médian (M) étant inférieure au rayon intérieur (R1), le flanc intérieur (4) étant incliné suivant un angle (α) compris entre 100° et 110° par rapport au premier flanc latéral (5) et le deuxième flanc latéral (6) étant orienté suivant un angle (β) compris entre 5° et 35° par rapport au premier flanc latéral (5).

2. Joint d'étanchéité annulaire (1) selon la revendication 1,
**caractérisé en ce que**
le flanc intérieur (4) présente au moins une portion de courbure concave (8), en particulier **en ce que** le flanc intérieur (4) présente en totalité une courbure concave.

3. Joint d'étanchéité annulaire (1) selon la revendication 2,
**caractérisé en ce que**
la profondeur maximale de la courbure de la portion de courbure concave (8) est comprise entre 1 % et 20 %, en particulier est de 15 %, de la largeur (9) du joint d'étanchéité annulaire (1).

4. Joint d'étanchéité annulaire (1) selon l'une quelconque des revendications 1 à 3,
**caractérisé en ce que**
le flanc intérieur (4) est incliné suivant un angle (α) de 105° par rapport au premier flanc latéral (5).

5. Joint d'étanchéité annulaire (1) selon l'une quelconque des revendications 1 à 4,
**caractérisé en ce que**
la transition (10a) du flanc intérieur (4) au deuxième flanc latéral (6) présente une distance (A) à l'axe médian (M), et **en ce que** la distance (A) est inférieure au rayon intérieur (R1).

6. Joint d'étanchéité annulaire (1) selon l'une quelconque des revendications 1 à 5,
**caractérisé en ce**
**qu'**un flanc extérieur (11) est prévu, et **en ce que** le flanc extérieur (11) est orienté au moins en partie, notamment complètement, perpendiculairement au premier flanc latéral (5).

7. Joint d'étanchéité annulaire (1) selon l'une quelconque des revendications 1 à 6,
**caractérisé en ce**
**qu'**un flanc extérieur (11) est prévu et **en ce que** l'étendue (12) du flanc extérieur (11), mesurée perpendiculairement au premier flanc latéral (5), est inférieure à la largeur (9) du joint d'étanchéité annulaire (1).

8. Joint d'étanchéité annulaire (1) selon l'une quelconque des revendications 1 à 7,
**caractérisé en ce que**
le flanc intérieur (4) et/ou le premier flanc latéral (5) et/ou le deuxième flanc latéral (6) et/ou le flanc extérieur (11) présentent une allure continue.

9. Joint d'étanchéité annulaire (1) selon l'une quelconque des revendications 1 à 8,
**caractérisé en ce que**
les transitions (10a, 10b, 10c, 10d) entre le flanc intérieur (4), le premier flanc latéral (5), le deuxième flanc latéral (6) et le flanc extérieur (11) présentent un rayon.

10. Joint d'étanchéité annulaire (1) selon l'une quelconque des revendications 1 à 9,
**caractérisé en ce que**
le deuxième flanc latéral (6) est orienté suivant un angle (β) compris entre 10° et 30° par rapport au premier flanc latéral (5).

11. Joint d'étanchéité annulaire (1) selon l'une quelconque des revendications 1 à 10,
**caractérisé en ce que**
le deuxième flanc latéral (6) s'étend entre un rayon intérieur (R3) et un rayon extérieur (R4), et **en ce que** le rayon intérieur (R3) du deuxième flanc latéral (6) est inférieur au rayon intérieur (R1) du premier flanc latéral (5).

12. Composant de raccordement (3) d'une installation hydraulique, à savoir d'un raccord de tuyau comprenant un joint d'étanchéité frontal selon ISO 8434-3 version 07/2005, comprenant au moins une rainure (2), la rainure (2) présentant un fond de rainure (7) et deux flancs de rainure (13a, 13b) disposés suivant un certain angle par rapport au fond de rainure (7), un joint d'étanchéité annulaire (1) réalisé selon la revendication 1 étant disposé dans la rainure (2), le premier flanc latéral (5) du joint d'étanchéité annulaire (1) s'appliquant contre le fond de rainure (7) de la rainure (2).

13. Composant de raccordement (3) selon la revendication 12,
**caractérisé en ce que**
le joint d'étanchéité annulaire (1) est réalisé selon l'une quelconque des revendications 2 à 11.

14. Composant de raccordement (3) selon la revendication 12 ou 13,
**caractérisé en ce que**
la largeur (9) du joint d'étanchéité annulaire (1), mesurée perpendiculairement au premier flanc latéral (5), est choisie de telle sorte que le joint d'étanchéité annulaire (1) dépasse de la rainure (2) de 10 % à 40 %, en particulier de 32 %, de la largeur (9) du joint d'étanchéité annulaire (1).

15. Composant de raccordement (3) selon l'une quelconque des revendications 12 à 14,
**caractérisé en ce que**
le diamètre extérieur (R_{A}) du joint d'étanchéité annulaire (1) présente un surdimensionnement par rapport à la rainure (2) de telle sorte que le joint d'étanchéité annulaire (1) soit comprimé radialement par la rainure.

16. Composant de raccordement (3) selon la revendication 15,
**caractérisé en ce que**
le joint d'étanchéité annulaire (1) est comprimé sur la périphérie de 5 % à 25 %, en particulier de 11 % à 22 % de la largeur (9) du joint d'étanchéité annulaire (1).

17. Composant de raccordement (3) selon l'une quelconque des revendications 12 à 16,
**caractérisé en ce que**
les flancs de rainure (13a, 13b) de la rainure (2) s'étendent au moins en partie parallèlement l'un à l'autre, en particulier sont inclinés dans les portions parallèles suivant un angle (γ) compris entre 50° et 70°, en particulier de 60°, par rapport au fond de rainure (7).
